# EUROPEAN PATENT SPECIFICATION

(11) **EP 1 628 053 B1**
(45) Date of publication and mention of the grant of the patent: **23.04.2008**
(21) Application number: 05013454.3
(22) Date of filing: 22.06.2005
(51) Int. Cl.: F16J 15/32, F16J 15/16

(54) **Oil seal**
Öldichtung
Joint étanche à l'huile

(30) Priority: 20.08.2004 JP 2004240372
(43) Date of publication of application: 22.02.2006
(73) Proprietor: Carl Freudenberg KG, 69469 Weinheim (DE)
(72) Inventor: Ito, Sosuke, Miyaki-gun Saga 849-0102 (JP)

(56) References cited:
- JP-Y2- 5 008 124
- PATENT ABSTRACTS OF JAPAN vol. 2002, no. 10, 10 October 2002 (2002-10-10) -& JP 2002 181200 A (NOK CORP), 26 June 2002 (2002-06-26)

## Description

### BACKGROUND OF THE INVENTION

### Field of the Invention

The present invention relates to an oil seal, and more particularly to an oil seal provided with a slit in a dust lip for the purpose of improving a dust resistance.

### Description of the Related Art

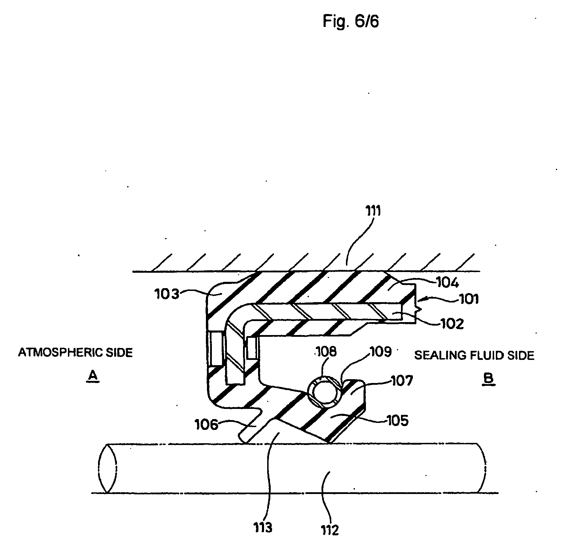

In conventional, for example, there has been known an oil seal 101 shown in Fig. 6. The oil seal 101 is constituted by an annular member 102 having an L-shaped cross sectional shape, and a seal main body 103 vulcanized and adhered so as to cover the annular member 102 and made of a rubber-like elastic body. The seal main body 103 is constituted by a fixed seal portion 104 positioned in an outer peripheral side of the annular member 102, and a seal lip portion 107 having a main lip 105 in a leading end portion in an inner peripheral side of the annular member 102 and a dust lip 106 positioned in an atmospheric side A from the main lip, and a concave portion 109 for attaching a garter spring 108 is formed in an outer peripheral side corresponding to an opposite side to an edge of the main lip 105.

The oil seal 101 is arranged between a housing 111 positioned in an outer peripheral side of the oil seal 101, and a shaft 112 arranged in an inner peripheral side of the annular member 102 and coaxial with the housing 111, the annular member 102 is fitted to the housing 111 via the fixed seal portion 104, and the main lip portion 105 and the dust lip 106 are attached to the shaft 112 so as to slide.

In this oil seal 101, an effect of preventing a fluid to be sealed from flowing out to the atmospheric side A is mainly achieved by the main lip 105, and an effect of preventing dusts in the atmospheric side A from being mixed into the fluid to be sealed and preventing the dusts from being attached to the main lip 105 so as to be early worn away is mainly achieved by the dust lip 106 positioned in the atmospheric side A. Further, the garter spring 108 attached to the concave portion 109 formed in the opposite side to the lip edge fastens in an inner diameter direction, whereby reinforcing a tension force of the main lip 105 to the shaft 112.

In the structure mentioned above, since the main lip 105 prevents the fluid prevents the fluid in a sealing fluid side B from flowing out and is operated in such a manner as to suck the fluid existing in an annular space 113 formed between the main lip 105 and the dust lip 106 to the sealing fluid side B, the annular space 113 becomes negative pressure, and an abrasion of the main lip 105 is promoted. Accordingly, the negative pressure of the annular space 113 without setting a fastening margin in the dust lip 106 is avoided, however, there is a problem that a seal effect of the dust lip 106 with respect to the dust is not sufficiently achieved.

In order to solve the problem, in Japanese Utility Model Publication No. 5-8124, there has been proposed a structure in which a dust lip is provided with a hole with bottom in which a weakening portion open in the case that a pressure difference between the annular space and the external portion is equal to or more than a predetermined level is formed in a bottom portion. However, since the hole with bottom is provided in the dust lip, and the weakening portion is formed in the bottom portion of the hole with bottom, a shape of a product becomes complex. Further, in the case that the weakening portion formed in the bottom portion is formed in a peripheral direction, there has been a problem that it is hard to release from a metal mold at a time of vulcanizing.

### SUMMARY OF THE INVENTION

The present invention is made by taking the problems mentioned above into consideration, and an object of the present invention is to provide an oil seal which can correspond to a pressure change of an annular space even in the case that a fastening margin is set in a dust lip, and can be easily released from a metal mold at a time of manufacturing.

In order to achieve the object mentioned above, in accordance with the present invention, there is provided an oil seal in which a main lip sliding on one member on a sealing fluid side and a dust lip on an atmospheric side form an annular space, the oil seal comprising: a concave portion having a slit communicating with the atmospheric side when the annular space has a negative pressure on a bottom portion thereof, and disposed in a sealing side surface of the dust lip. Further a side wall of the concave portion is formed into a mortar shape when the slit is disposed in a peripheral direction, and a tilt angle formed by the side wall positioned in the peripheral direction among the mortar-shaped side walls with respect to a normal is set to be smaller than that formed by the side wall positioned on an axial direction side with respect to the normal.

The present invention achieves the following effects.

In other words, since the oil seal in accordance with the present invention provided with the structure mentioned above is provided with the slit in the bottom portion of the concave portion in the dust lip, it is possible to prevent the main lip from being early worn away by regulating the pressure change in the annular space even if the fastening margin is provided in the dust lip, and it is possible to improve a sealing performance of the dust by providing with the fastening margin in the dust lip. Further, since the slit provided in the bottom portion passes through only in the case that the annular space is in a negative pressure, it is possible to seal the dust at a time of the positive pressure, and it is possible to prevent the sealing performance from being lowered even if the slit is provided. Further, since the concave portion is provided in the sealing side surface of the dust lip, it is possible to prevent the dust or the like in the atmospheric side from being accumulated in the concave portion.

Further, since the mortar-shaped concave portion is provided at a time when the slit exists in the peripheral direction, and the angle of incline which the side wall positioned in the peripheral direction in the side wall forming the mortar-shaped concave portion forms with the normal is made smaller than the angle of incline which the side wall positioned in the axial direction side forms with the normal, it is possible to easily release from the metal mold after the vulcanization even in the case that the slit is provided in the peripheral direction.

### BRIEF DESCRIPTION OF THE DRAWINGS

Fig. 1 is a cross sectional view of an oil sear.
Fig. 2 is an enlarged view of a portion X in Fig. 1;
Fig. 3 is a cross sectional view of an oil seal in accordance with the present invention;
Fig. 4 is an enlarged plan view of a portion X in Fig. 3;
Fig. 5A is a cross sectional view of a portion along a line A-A in Fig. 4;
Fig. 5B is a cross sectional view of a portion along a line B-B in Fig. 5; and
Fig. 6 is a cross sectional view of an oil seal in accordance with a prior art.

### DESCRIPTION OF THE PREFERRED EMBODIMENT

A description will be given below of a preferable embodiment in accordance with the invention with reference to the accompanying drawings. In this case, the scope of the invention is not limited to the contents described in the embodiment as far as a limited description does not exist.

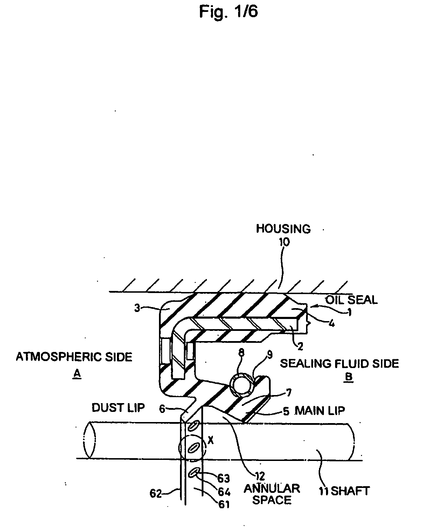

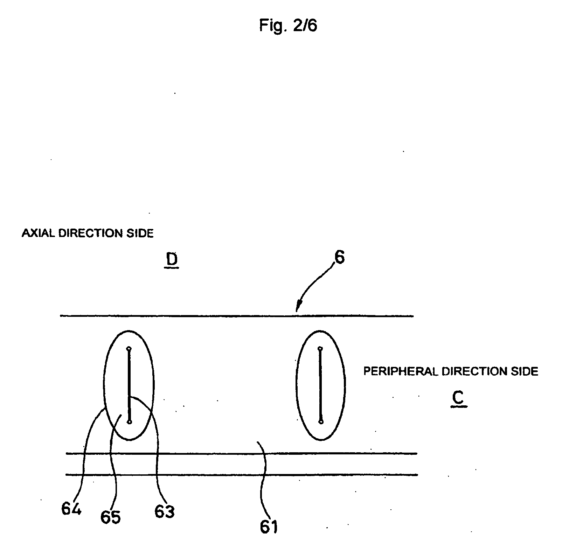

Fig. 1 is a cross sectional view of an oil seal and Fig. 2 is an enlarged view of a portion X in Fig. 1. The oil seal is structured as follows.

An oil seal 1 shown in Fig. 1 is structured by an annular member 2 formed in an L-shaped cross sectional shape and made of a metal, and a seal main body 3 constituted by a rubber-like elastic body vulcanized so as to cover the annular member 2. The seal main body 3 is structured by a fixed seal portion 4 positioned in an outer peripheral side of the annular member 2, and a seal lip portion 7 having a main lip 5 which is positioned in a leading end portion in an inner peripheral side of the annular member 2 and a dust lip 6 which is positioned in an atmospheric side A from the main lip. A concave portion 9 for attaching a garter spring 8 is formed in an outer peripheral side corresponding to an opposite side to a lip edge of the main lip 5.

The oil seal 1 is arranged between a housing 10 positioned in an outer peripheral side of the oil seal 1, and a shaft 11 positioned in an inner peripheral side of the annular member 2 and being concentric with the housing 10, the annular member 2 is fitted to the housing 10 via the fixed seal portion 4, and the main lip portion 5 and the dust lip 6 are attached to the shaft 11 so as to slide. Further, an annular space 12 is formed between the main lip 5 and the dust lip 6.

As shown in Fig. 2, a concave portion 64 open to the annular space 12 side and having a bottom portion 65 is provided in a sealing side surface 61 in the annular space 12 side of the dust lip 6, and a slit 63 reaching an atmospheric side surface 62 of the dust lip 6 is provided in the bottom portion 65 in an axial direction. The slit 63 is closed on the basis of an elastic force of a rubber-like elastic body forming the dust lip 6 at a time when the annular space 12 is in a positive pressure, however, is open so as to be communicated with the atmospheric side A at a time when the annular space 12 becomes in a negative pressure.

Accordingly, since the slit 63 is open so as to be communicated with the atmospheric side A at a time when the annular space 12 becomes in the negative pressure, it is possible to prevent the main lip 5 from being early worn away by regulating a pressure change in the annular space 12 even if a fastening margin is provided in the dust lip 6, and it is possible to improve a sealing performance of the dust by providing with the fastening margin in the dust lip 6. Further, since the slit 63 passes through only in the case that the annular space 12 is in the negative pressure and is closed in the case that the annular space 12 is in the positive pressure, it is possible to maintain the sealing performance of the dust lip 6 against the dust even if the slit 63 is provided. Further, since the concave portion 64 is provided in the sealing side surface 61 of the dust lip 6, it is possible to prevent the dust in the atmospheric side A from being accumulated in the concave portion 64.

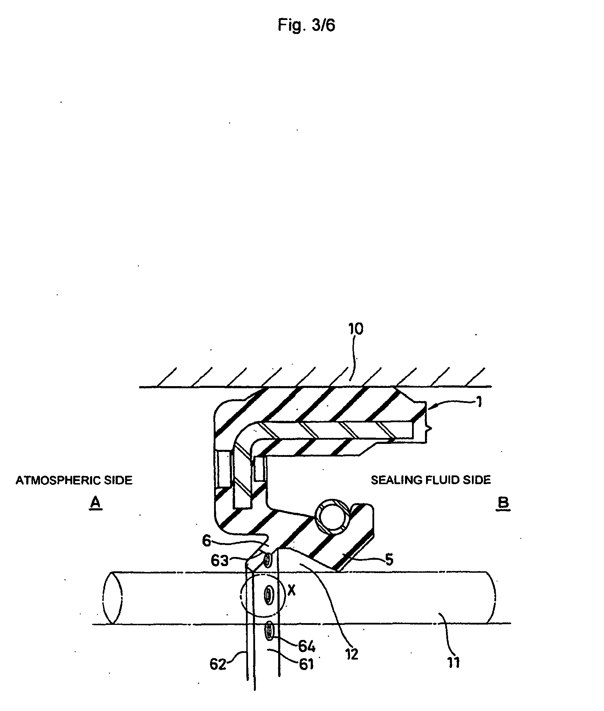

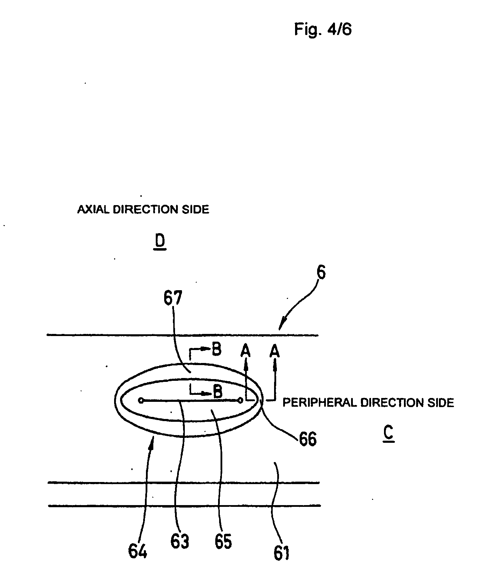

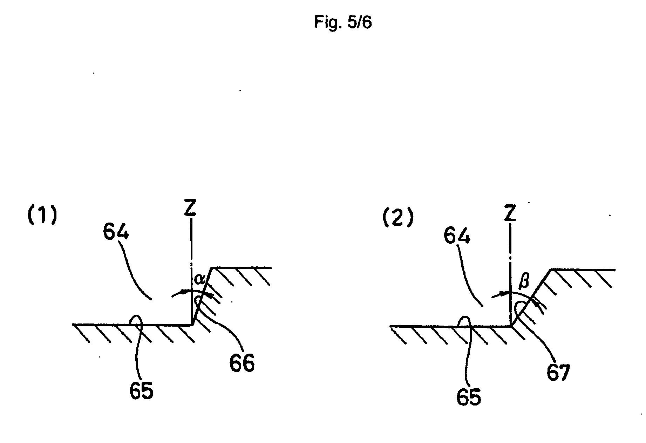

Fig. 3 is a cross sectional view of an oil seal in accordance with the present invention, Fig. 4 is an enlarged view of a portion X in Fig. 3, Fig. 5A is a cross sectional view of a portion along a line A-A in Fig. 4, and Fig. 5B is a cross sectional view of a portion along a line B-B.

An oil seal 1 in accordance with the present invention is structured, as shown in Fig. 3, such that a concave portion 64 which is open to an annular space 12 side, has a bottom portion 65 and has a mortar-shaped side wall is provided in a sealing side surface 61 in the annular space 12 side of a dust lip 6, and a slit 63 reaching an atmospheric side surface 62 of the dust lip 6 is provided in the bottom portion 65 in a peripheral direction. The slit 63 is open so as to be communicated with the atmospheric side A in the case that the annular space 12 is in a negative pressure, and is closed on the basis of an elastic force of a rubber-like elastic body forming the dust lip 6 in the case that the annular space 12 is in a positive pressure.

As shown in Figs. 4 and 5, the side walls 66 and 67 forming the mortar-shaped concave portion 64 is formed in such a manner that an angle α of incline which the side wall 66 positioned in a peripheral direction side C forms with a normal Z is made smaller than an angle β of incline which the side wall 67 positioned in an axial direction side D forms with the normal Z.

Accordingly, since the slit 63 is open so as to be communicated with the atmospheric side A at a time when the annular space 12 becomes in the negative pressure, it is possible to prevent the main lip 5 from being early worn away by regulating the pressure change in the annular space 12 even if the fastening margin is provided in the dust lip 6, and it is possible to improve a sealing performance of the dust by providing with the fastening margin in the dust lip 6. Further, since the slit 63 passes through only in the case that the annular space 12 is in a negative pressure and is closed in the case that the annular space 12 is in a positive pressure, it is possible to maintain the sealing performance against the dust even if the slit 63 is provided in the dust lip 6. Further, since the concave portion 64 is provided in the sealing side surface 61 of the dust lip 6, it is possible to prevent the dust in the atmospheric side A from being accumulated in the concave portion 64. Further, since the side wall forming the concave portion 64 is formed in a mortar shape at a time when the slit 63 provided in the bottom portion 65 exists in the peripheral direction, and the angle αof incline which the side wall 66 positioned in the peripheral direction side C in the side wall forms with the normal Z is smaller than the angle β of incline which the side wall 67 positioned in the axial direction side D forms with the normal Z, it is possible to easily release from the metal mold after the vulcanization of the product.

## Claims

1. An oil seal (1) in which a main lip (5) sliding on one member on a sealing fluid side (B) and a dust lip (6) on an atmospheric side (a) form an annular space (12), the oil seal (1) comprising: a concave portion (64) having a slit (63) communicating with the atmospheric side (A) when the annular space (12) has a negative pressure on a bottom portion thereof, and disposed in a sealing side surface of the dust lip (6), **characterized in that** a side wall (66, 67) of the concave portion (64) is formed into a mortar shape, the slit (63) being disposed in a peripheral direction, and a tilt angle formed by the side wall (66) positioned in the peripheral direction (C) among the mortar-shaped side walls (66, 67) with respect to a normal (Z) is set to be smaller than that formed by the side wall (67) positioned on an axial direction side (D) with respect to the normal (Z).

2. The oil seal according to claim 1, whereby a seal main body (3) comprising the main lip (5) and the durst lip (6) is constituted by a rubber-like elastic body.

3. The oil seal according to claims 1 or 2, whereby the slit (63) is closed on the basis of an elastic force of a rubber-like elastic body forming the dust lip (6).

4. The oil seal according to one of the claims 1 to 3, whereby the slit (63) is open so as to be communicated with the atmospheric side (A) at a time when the annular space (12) becomes in a negative pressure.

5. The oil seal according to one of the claims 1 to 4, whereby the concave portion (64) is elliptic shaped.

## Patentansprüche

1. Öldichtung (1), bei der eine auf einem Glied auf einer Dichtungsfluidseite (B) gleitende Hauptlippe (5) und eine Staublippe (6) auf einer Atmosphärenseite (A) einen ringförmigen Raum (12) bilden, wobei die Öldichtung (1) Folgendes umfasst: einen konkaven Teil (64) mit einem Schlitz (63), der mit der Atmosphärenseite (A) in Verbindung steht, wenn der ringförmige Raum (12) an einem Unterteil davon einen Unterdruck aufweist, und der in einer Dichtungsseitenfläche der Staublippe (6) angeordnet ist, **dadurch gekennzeichnet, dass** eine Seitenwand (66, 67) des konkaven Teils (64) zu einer Schalenform ausgebildet ist, wobei der Schlitz (63) in einer Umfangsrichtung angeordnet ist, und ein Neigungswinkel, der durch die in Umfangsrichtung (C) positionierte Seitenwand (66) zwischen den schalenförmigen Seitenwänden (66, 67) bezüglich einer Senkrechten (Z) gebildet wird, so eingestellt ist, dass er kleiner ist als der durch die auf einer Axialrichtungsseite (D) positionierte Seitenwand (67) bezüglich der Senkrechten (Z) gebildete Neigungswinkel.

2. Öldichtung nach Anspruch 1, wobei ein die Hauptlippe (5) und die Staublippe (6) umfassender Dichtungshauptkörper (3) aus einem gummiartigen, elastischen Körper gebildet wird.

3. Öldichtung nach Anspruch 1 oder 2, wobei der Schlitz (63) auf Grundlage einer elastischen Kraft des die Staublippe (6) bildenden gummiartigen, elastischen Körpers geschlossen wird,

4. Öldichtung nach einem der Ansprüche 1 bis 3, wobei der Schlitz (63) zu einem Zeitpunkt, wenn der ringförmige Raum (12) mit einem Unterdruck beaufschlagt wird, offen ist, so dass er mit der Atmosphärenseite (A) in Verbindung steht.

5. Öldichtung nach einem der Ansprüche 1 bis 4, wobei der konkave Teil (64) elliptisch ausgebildet ist.

## Revendications

1. Joint (1) étanche à l'huile dans lequel une lèvre principale (5) glissant sur un élément d'un côté (B) d'étanchéité au fluide et une lèvre anti-poussière (6) d'un côté atmosphérique (A) forment un espace annulaire (12), le joint (1) étanche à l'huile comportant : une partie concave (64) dotée d'une fente (63) communiquant avec le côté atmosphérique (A) lorsque l'espace annulaire (12) est soumis à une pression négative sur une partie inférieure de celui-ci et disposée dans une surface côté étanchéité de la lèvre anti-poussière (6), **caractérisé en ce qu'**une paroi latérale (66, 67) de la partie concave (64) est façonnée en forme de mortier, la fente (63) étant disposée dans une direction périphérique, et un angle d'inclinaison formé par la paroi latérale (66) positionnée dans la direction périphérique (C) parmi les parois latérales (66, 67) en forme de mortier par rapport à une normale (Z) étant fixé de façon à être inférieur à celui formé par la paroi latérale (67) positionnée d'un côté (D) en direction axiale par rapport à la normale (Z).

2. Joint étanche à l'huile selon la revendication 1, un corps principal (3) de joint comportant la lèvre principale (5) et la lèvre anti-poussière (6) étant constitué d'un corps élastique caoutchouteux.

3. Joint étanche à l'huile selon les revendications 1 ou 2, la fente (63) étant fermée sous l'effet d'une force élastique d'un corps élastique caoutchouteux formant la lèvre anti-poussière (6).

4. Joint étanche à l'huile selon l'une des revendications 1 à 3, la fente (63) étant ouverte de façon à être mise en communication avec le côté atmosphérique (A) à un instant où l'espace annulaire (12) devient soumis à une pression négative.

5. Joint étanche à l'huile selon l'une des revendications 1 à 4, la partie concave (64) étant de forme elliptique.
